# NEUE EUROPÄISCHE PATENTSCHRIFT

(11) **EP 0 455 963 B2**
(45) Veröffentlichungstag und Bekanntmachung des Hinweises auf die Entscheidung über den Einspruch: **18.11.1998**
(45) Hinweis auf die Patenterteilung: 30.11.1994
(21) Anmeldenummer: 91104282.8
(22) Anmeldetag: 20.03.1991
(51) Int. Cl.: H04L 7/00, H04L 5/22, H04J 3/06

(54) **Anordnung und Verfahren zum Abbilden eines ersten Nutzsignals aus dem Rahmen eines ersten Digitalsignals mittels Impulsstopftechnik in den Rahmen eines zweiten Digitalsignals**
Arrangement and method for transforming a first useful signal from the frame of a first digital signal by pulse stuffing techniques to the frame of a second digital signal
Dispositif et procédé de transformation d'un premier signal utile de la trame d'un premier signal numérique au moyen de technique de justification d'impulsion dans la trame d'un second signal numérique

(30) Priorität: 09.05.1990 DE 4014815
(43) Veröffentlichungstag der Anmeldung: 13.11.1991
(73) Patentinhaber: ROBERT BOSCH GMBH, 70442 Stuttgart (DE)
(72) Erfinder: Nawrocki, Rainer, Dr.-Ing., W-2000 Hamburg 20 (DE); Brünle, Siegfried, Dipl.-Ing., W-7300 Esslingen (DE); Ehrlich, Wolfgang, Dipl.-Ing., W-7151 Allmersbach i.T. (DE)
(74) Vertreter: Friedmann, Jürgen, Dr.-Ing.

(56) Entgegenhaltungen:
- EP-A- 0 158 302
- EP-A- 0 165 619
- EP-B- 308 450
- EP-B- 526 465
- US-A- 4 764 941
- FREQUENZ, Band 32, Nr. 10, Oktober 1978, Berlin, DE; F.KÜHLE, K.LANG: "Positiv-Null-Negativ-Stopftechnik für die Multiplexübertragung plesiochroner Datensignale", Seiten 281-287
- THE BELL SYSTEM TECHNICAL JOURNAL, Band 51, Nr. 1, Januar 1972, New York, US; D.L.DUTTWEILER: "Waiting Time Jitter", Seiten 165-207
- DIGITALE VERMITTLUNGSTECHNIK, 1981, R.Oldenbourg Verlag, München-Wien; H.BESIER et al., Seiten 137-144
- Nachrichtentechnische Zeitung 29 (1976) Heft 4, Seiten 307-313, B.Müller: "Messung der Langzeit-Phasenschwankungen in Stuffing Multiplexsystemen für PCM- und Datensignale"

## Beschreibung

Die Erfindung betrifft eine Anordnung zum Abbilden eines Nutzsignals aus dem Rahmen eines ersten Digitalsignals mit einer ersten Bitrate mittels Impulsstopftechnik in den Rahmen eines zweiten Digitalsignals mit einer zweiten Bitrate nach dem Oberbegriff des Patentanspruches 1 und ein Verfahren zum Abbilden eines Nutzsignals aus dem Rahmen eines ersten Digitalsignals mit einer ersten Bitrate mittels Impulsstopftechnik in den Rahmen eines zweiten Digitalsignals mit einer zweiten Bitrate gemäß dem Oberbegriff des Patentanspruches 7.

Wenn ein gegebenes Digitalsignal mit einer anderen als mit seiner ursprünglichen Bitrate übertragen werden soll, dann wird das verfahren des Impulsstopfens eingesetzt. Es wird insbesondere dann angewandt, wenn plesiochrone Signale im Zeitmultiplex in Multiplexgeräten gebündelt werden und wenn ein Signal mit einer ersten Bitrate zum Zwecke der Synchronisierung in einen Durchschalterahmen mit einer zweiten, höheren Bitrate abgebildet wird. Im wesentlichen sind zwei Varianten des Impulsstopfens bekannt: Das Positiv-Stopfen und das Positiv-Null-Negativ-Stopfen.

Aus Duttweiler D.L., "Waiting Time Jitter",
The BELL System Technical Journal, Vol. 51, No. 1, 1972, S. 165-207 ist ein Synchronisierer und ein Desynchronisierer für Positiv-Stopfen beschrieben.

Aus dem Artikel von Kühne F. und Lang K., "Positiv-Null-Negativ-Stopftechnik für Multiplexübertragung plesiochroner Signale", Frequenz, Bd. 32, Nr. 10, 1978, S.281-287 ist ein Synchronisierer und ein Desynchronisierer für das Positiv-Null-Negativ-Stopfen bekannt.

In beiden Fällen wird ein Eingangssignal mit einer ersten Bitrate in ein Ausgangssignal mit einer zweiten Bitrate abgebildet. Das Eingangssignal wird dazu in einen elastischen Speicher eingeschrieben, wobei die Adressierung mit einem Schreibzähler, der mit einem Takt zählt, der der ersten Bitrate entspricht, erfolgt. Für das Ausgangssignal werden die Daten dann aus dem elastischen Speicher wieder ausgelesen, wobei ein Lesezähler mitläuft. Wenn die Bitraten von Ausgangs- und Eingangssignal voneinander abweichen, sind Stopfvorgänge erforderlich. Ein Phasenvergleicher vergleicht die Phasen von Schreibzähler und Lesezähler. Weicht die Phasendifferenz um einen bestimmten Wert von ihrem Sollwert ab, so veranlaßt eine Steuerschaltung einen Stopfvorgang. Beim Positiv-Stopfen wird an einer definierten Stelle ein Stopfbit in das Ausgangssignal übernommen. Beim Negativ-Stopfen wird ein Informationsbit aus dem elastischen Speicher in einem Hilfskanal übertragen. Die Information, ob in einem stopfbaren Zeitabschnitt (positive Stopfstelle) ein Nutzinformationsbit oder ein Stopfbit übertragen wird, oder ob in dem Hilfskanal ein Informationsbit (negative Stopfstelle) übertragen wird, wird in den sogenannten Stopfinformationsbits des Hilfskanal übertragen. Wenn das ursprüngliche Digitalsignal wieder zurückgewonnen werden soll, müssen die Stopfvorgänge wieder rückgängig gemacht werden. Ein wichtiger Punkt ist dabei die Taktrückgewinnung. Der Takt wird im Desynchronisierer meist nur unvollkommen geglättet und unterscheidet sich vom ursprünglichen Takt durch eine Phasenmodulation, den Wartezeitjitter.

Wenn ein Nutzsignal aus dem Rahmen eines ersten Digitalsignals in den Rahmen eines zweiten Digitalsignals umgestopft werden soll, so wird zunächst das Nutzsignal mit Hilfe einer Phasenregelschleife wiedergewonnen. Das rückgewonnene Nutzsignal ist mit einem Wartezeitjitter behaftet. Dieses rückgewonnene Nutzsignal kann dann in den Rahmen des zweiten Digitalsignals gemappt werden.

Der Erfindung liegt die Aufgabe zugrunde, eine Anordnung anzugeben, mit der es möglich ist, ein Nutzsignal aus einem ersten Digitalsignal mit einem ersten Rahmen und einer ersten Bitrate direkt in ein zweites Digitalsignal mit einem zweiten Rahmen und einer zweiten Bitrate umzustopfen. Außerdem ist es Aufgabe der Erfindung, ein Verfahren anzugeben, das ein einfaches Umstopfen ermöglicht.

Die Aufgabe wird bezüglich der Anordnung mit den Merkmalen des Patentanspruches 1 und bezüglich des Verfahrens mit den Merkmalen des Patentanspruches 6 gelöst. Vorteilhafte Weiterbildungen sind in den Unteransprüchen angegeben.

Mit der erfindungsgemäßen Anordnung, bzw. dem erfindungsgemäßen Verfahren ist es möglich, das Stopfen eines Nutzsignals aus einem ersten Digitalsignal mit einem ersten Rahmen in ein zweites Digitalsignal mit einem zweiten Rahmen in einem Schritt durchzuführen. Die Bitrate des Nutzsignals ist dabei geringer als die Bitraten der beiden Digitalsignale. Es wird nicht zunächst ein Desynchronisierer und dann ein Synchronisierer mit jeweils einem elastischen Speicher eingesetzt, sondern es ist nur ein elastischer Speicher notwendig. Außerdem ist kein analoger Phasenregelkreis notwendig. Mit Hilfe der angegebenen Anordnung wird der mittlere Füllstand des elastischen Speicher ermittelt, aus dem die Stopfentscheidung gewonnen werden kann. Ob gestopt wird hängt davon ab, ob der mittlere Füllstand bestimmte Schwellwerte über- oder unterschreitet.

Gemäß dem Stand der Technik wird die Information, ob gestopft wurde oder nicht, in 1-bit-Schritten mittels der Stopfinformation vom Synchronisierer zum Desynchronisierer übertragen. Hierdurch kann ein hoher Wartezeitjitter auftreten. Weist das Ausgangssignal der Anordnung ausreichend freien Platz auf, so daß Zusatzinformationen übertragen werden, dann kann der mittlere Füllstand des elastischen Speichers zum Desynchronisierer übertragen werden. Nutzt man diesen mittleren Füllstand aus, um die PLL-Anordnung im Desynchronisierer zu steuern, so findet eine Phasenmitführung statt, und der Wartezeitjitter im Desynchronisierer kann reduziert werden. Zur Durchführung dieses Verfahrens ist es notwendig, den mittleren Füllstand des elastischen Speichers der Anordnung genau zu bestimmen.

Die erfindungsgemäße Anordnung und das erfindungsgemäße Verfahren zum Ermitteln von Stopfinformation ermöglichen es also, daß, durch Übertragung des mittleren Füllstandes der Wartezeitjitter reduziert werden kann. Außerdem wird eine Methode zum Finden von Stopfentscheidungen angegeben, die insbesondere dann besonders unaufwendig ist, wenn der mittlere Füllstand des Speichers aufgrund der angestrebten Reduzierung des Wartezeitjitters ermittelt wird.

Mit dem digitalen Tiefpaß der Anordnung wird erreicht, daß der Einfluß der unterschiedlichen Rahmenfrequenzen der verschiedenen Digitalsignale minimal ist. Mit dem Korrekturwert wird am Ausgang des Tiefpaßes der gewünschte sägezahnförmige Verlauf des mittleren Speicherfüllstandes gewonnen. Bei einem der Anordnung nachgeschalteten Desynchronisierer wird dadurch keine Phasenregelschleife mit einer niedrigen Grenzfrequenz benötigt.

Anhand der Zeichnung wird ein Ausführungsbeispiel der Erfindung erläutert.

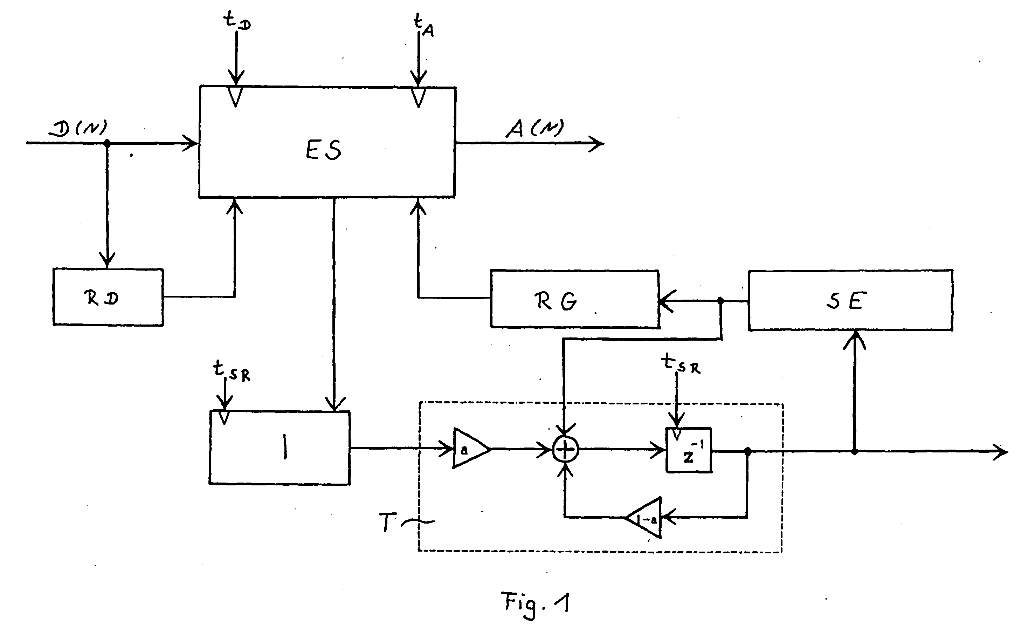

- Figur 1: zeigt ein Blockschaltbild einer erfindungsgemäßen Anordnung.

Der Anordnung wird das erste Digitalsignal D, das ein Nutzsignal N enthält, zugeführt Das Nutzsignal N wird in einen elastischen Speicher ES gelückt eingeschrieben. Ein Rahmendetektor RD erkennt den Rahmen des Digitalsignals D und steuert die Schreibaktivierung des elastischen Speichers ES. Aus dem elastischen Speicher ES wird das Nutzsignal N gelückt ausgelesen, das in den Rahmen eines Digitalsignals A eingefügt wird. Das Digitalsignal Aweist eine Stopfrahmenfrequenz t_{SR} auf. In jedem Stopfrahmen besteht die Möglichkeit einmal zu Stopfen. Ein Rahmengenerator RG ist vorgesehen, der den Rahmen des Digitalsignals A erzeugt und die Leseaktivierung des elastischen Speichers ES steuert Der momentane Füllstand des elastischen Speichers ES wird bestimmt. Zur Ermittlung des mittleren Füllstandes des elastischen Speichers ES, der einmal je Stopfrahmen ermittelt und übertragen werden soll, werden die momentanen Füllstände in einem Integrierer 1 aufakkumuliert Dies geschieht einmal je Stopfrahmen, also mit der Frequenz des Stopfrahmens t_{SR}, die dem Integrierer zugeführt wird. Es ist bei der Aufakkumulation nicht notwendig, alle Vergleichswerte als Summanden vorzusehen. Es ist aber sinnvoll die Summanden äquidistant im Rahmen des Digitalsignals A zu verteilen. Das Ausgangssignal des Integrierers I ist der mittlere Füllstand des elastischen Speichers ES des n-ten Stopfrahmens. Dieses Signal wird einem digitalen Tiefpaß T zugeführt. Der digitale Tiefpaß wird ebenfalls mit der Stopfrahmenfrequenz t_{SR} getaktet. Sein Ausgangssignal ist der mittlere gefilterte Füllstand des elastischen Speichers des n-ten Stopfrahmens. Der mittlere gefilterte Speicherfüllstand kann als Zusatzinformation im Rahmen des Digitalsignals A zum Desynchronisierer übertragen werden. Außerdem wird der mittlere gefilterte Speicherfüllstand des n-ten Stopfrahmens einem Entscheider SE zugeführt, der die Stopfentscheidung in Abhängigket von dem Ausgangssignal des Tiefpaßfilters T fällt. Die Stopfentscheidung wird in Form eines Korrekturwertes dem Rahmengenerator RG zugeführt. Außerdem wird sie auch dem digitalen Tiefpaß zugeführt, um das Ausgangssignal des Tiefpaßes zu korrigieren. Eine Stopfentscheidung wird wie folgt gefällt: Positiv wird gestopft, wenn der mittlere gefilterte Speicherfüllstand des n-ten Stopfrahmens kleiner als eine untere
Schwelle für den mittleren Speicherfüllstand Sᵤ ist. Negativ wird gestopft, wenn der mittlere gefilterte Speicherfüllstand des n-ten Stopfrahmens größer als die obere Schwelle für den mittleren Speicherfüllstand Sₒ ist. Liegt der mittlere gefilterte Speicherfüllstand des n-ten Stopfrahmens zwischen der oberen Schwelle Sₒ und der unteren Schwelle Sᵤ, so ist kein Stopfen notwendig. Beim positiven Stopfen beträgt der Korrekturwert 1, beim negativen Stopfen -1 und wenn kein Stopfen durchgeführt wird beträgt der Korrekturwert 0. Der Zusammenhang zwischen dem mittleren gefilterten Speicherfüllstand des n-ten Stopfrahmens und dem Korrekturwert für den n-ten Stopfrahmen, sowie dem Stopfvorgang im n-ten Stopfrahmen wird in der folgenden Tabelle dargestellt.

| Stopfen im n-ten Stopfrahmen | Korrekturwert für den n-ten Stopfrahmen | mittlerer, gefilterter Speicherfüllstand des n-ten Stopfrahmens |
|---|---|---|
| | stpₙ | msptₙ |
| negativ | stpₙ = - 1 | msptₙ > Sₒ |
| positiv | stpₙ = 1 | msptₙ < Sᵤ |
| kein | stpₙ = 0 | Sᵤ ≤ msptₙ ≤ Sₒ |

Durch Einsatz des Tiefpasses und durch Zuführung des Korrekturwertes wird der sägezahnförmige Verlauf des mittleren Speicherfüllstandes wieder hergestellt. Dazu müssen die notwendigen Komponenten, die vom Tiefpaß weggefiltert werden, am Addierer des Tiefpaßes wieder hinzuaddiert werden. Das Einspeisen des Korrekturwertes am Addierer des Tiefpaßes erzeugt am Tiefpaßausgang durch Rückkopplung wieder die Komponenten des Sägezahns und somit den gewünschten Verlauf des Speicherfüllstandes. Die Stützstellen zur Ermittlung des mittleren Speicherfüllstandes sind über den gesamten Stopfrahmen verteilt, um die Rauschamplitude zu minimieren, die durch die unterschiedlichen Rahmenfrequenzen verursacht werden.

## Patentansprüche

1. Anordnung zum Abbilden eines Nutzsignals aus dem Rahmen eines ersten Digitalsignals (D) mit einer ersten Bitrate mittels Impulsstopftechnik in den Rahmen eines zweiten Digitalsignals (A) mit einerzweiten Bitrate mit den folgenden Merkmalen:
a) ein elastischer Speicher (ES) ist vorgesehen, in den das Nutzsignal (N) aus dem Rahmen des ersten Digitalsignals (D) eingeschrieben wird und aus dem das Nutzsignal (N) in den Rahmen des zweiten Digitalsignals (A) ausgelesen wird;
b) ein Rahmendetektor (RD) ist vorgesehen, der den Rahmen des ersten Digitalsignals D erkennt und die Schreibaktivierung des elastischen Speichers (ES) steuert;
c) ein Rahmengenerator (RG) ist vorgesehen, der den Rahmen des zweiten Digitalsignals (A) erzeugt und die Leseaktivierung des elastischen Speichers (ES) steuert;
gekennzeichnet dadurch, daß:
d) ein Integrator (I) vorgesehen ist, der ein Maß für den mittleren Füllstand des elastischen Speicher (ES) bildet;
e) mit dem Integrator (I) ein Tiefpaßfilter (T) verbunden ist;
f) das Tiefpaßfilter (T) mit einem Entscheider (SE) verbunden ist, der die Stopfentscheidung in Abhängigkeit vom Ausgangssignal des Tiefpaßfilters (T) fällt und einen Korrekturwert erzeugt, der die Stopfinformation enthält;
g) der Entscheider (SE) mit einem Rahmengenerator (RG) verbunden ist, der das Stopfen nach Maßgabe des Korrekturwertes veranlaßt;
h) der Entscheider (SE) mit dem Tiefpaßfilter (T) verbunden ist, um die Ausgangsspannung des Tiefpaßfilters (T) mit dem Korrekturwert zu korrigieren.

2. Anordnung nach Anspruch 1, dadurch gekennzeichnet, daß der Entscheider (SE) eine Stopfentscheidung nach den folgenden Kriterien trifft: Es wird positiv gestopft, falls der mittlere Füllstand des elastischen Speichers im n-ten Stopfrahmen kleiner als die untere Schwelle für den mittleren Speicherfüllstand ist. Es wird negativ gestopft, falls der mittlere Füllstand für den elastischen Speicher im n-ten Stopfrahmen größer als die obere Schwelle für den mittleren Pufferfüllstand ist. Es wird nicht gestopft, wenn der mittlere Füllstand des elastischen Speichers im n-ten Stopfrahmen zwischen der oberen und der unteren Schwelle für den mittleren Füllstand liegt.

3. Anordnung nach einem der Ansprüche 1 oder 2, dadurch gekennzeichnet, daß der Integrator (I) das Maß für den mittleren Füllstand des elastischen Speichers (ES) an festen Stützstellen des Rahmens des zweiten Digitalsignals (A) bestimmt.

4. Anordnung nach einem der Ansprüche 1 bis 3, dadurch gekennzeichnet, daß das Tiefpaßfilter (T) ein digitales Filter ist.

5. Anordnung nach Anspruch 4, dadurch gekennzeichnet, daß ein Addierer im Tiefpaßfilter (T) vorgesehen ist, dem der Korrekturwert zugeleitet wird, um mittels Rückkopplung den mittleren Füllstand des elastischen Speichers zu erzeugen.

6. Verfahren zum Abbilden eines Nutzsignals aus dem Rahmen eines ersten Digitalsignals (D) mit einer ersten Bitrate mittels Impulsstopftechnik in den Rahmen eines zweiten Digitalsignals (A) mit einer zweiten Bitrate mit den folgenden Merkmalen:
a) das Nutzsignal (N) wird aus dem Rahmen des ersten Digitalsignals (D) in einen elastischen Speicher (ES) geschrieben;
b) das Nutzsignal (N) wird in den Rahmen des zweiten Digitalsignals (A) aus dem elastischen Speicher (ES) ausgelesen;
gekennzeichnet dadurch, daß:
c) ein Maß für den mittleren Füllstand des elastischen Speichers (ES) an festen Stützstellen des Rahmens des zweiten Digitalsignals (A) bestimmt wird;
wobei die momentanen Füllstände eimmal je Rahmen akkumuliert werden,
d) das Maß für den mittleren Füllstand einem Entscheider (SE) zugeführt wird, der die Stopfentscheidung in Abhängigkeit von dem Maß des mittleren Füllstandes des elastischen Speichers fällt und einen die Stopfinformation enthaltenden Korrekturwert erzeugt;
e) mit dem Korrekturwert das Stopfen nach Maßgabe des Korrekturwertes veranlaßt wird.

7. Verfahren nach Anspruch 6, dadurch gekennzeichnet, daß das Maß für den mittleren Füllstand des elastiscchen Speichers gefiltert wird.

8. Verfahren nach Anspruch 7, dadurch gekennzeichnet, daß der Korrekturwert das gefilterte Maß für den mittleren Füllstand des elastischen Speichers mittels Rückkopplung korrigiert.

9. Verfahren nach Patentanspruch 7 oder 8, dadurch gekennzeichnet, daß der mittlere gefilterte Füllstand als Zusatzinformation im Rahmen des zweiten Digitalsignals (A) zu einem Desynchronisierer übertragen wird.

## Claims

1. Arrangement, for copying an information signal out of the frame of a first digital signal (D) at a first bit rate by means of pulse-stuffing technique into the frame of a second digital signal (A) at a second bit rate, with the following features:
a) an elastic storage device (ES) is provided, into which the information signal (N) out of the frame of the first digital signal (D) is written and out of which the information signal (N) is read into the frame of the second digital signal (A),
b) a frame detector (RD) is provided, which recognises the frame of the first digital signal (D) and controls the write activation of the elastic storage device (ES), and
c) a frame generator (RG) is provided, which generates the frame of the second digital signal (A) and controls the read-activation of the elastic storage device (ES),
characterised thereby, that
d) an integrator (I) is provided, which forms a measure for the mean filling state of the elastic storage device (ES),
e) a low-pass filter (T) is connected with the integrator (I),
f) the low-pass filter (T) is connected with a decider (SE), which makes the stuffing decision in dependence on the output signal of the low-pass filter (T) and produces a correction value which contains the stuffing information,
g) the decider (ES) is connected with a frame generator (RG), which initiates the stuffing in accordance with the correction value, and
h) the decider (ES) is connected with the low-pass filter (T) in order to correct the output voltage of the low-pass filter (T) by the correction value.

2. Arrangement according to claim 1, characterised thereby, that the decider (SE) makes a stuffing decision according to the following criteria:
Positive stuffing is done in case the mean filling state of the elastic storage device in the nth stuffing frame is less than the lower threshold for the mean storage device filling state.
Negative stuffing is done in case the mean filling state of the elastic storage device in the nth stuffing frame is greater than the upper threshold for the mean buffer filling state.
No stuffing is done when the mean filling state elastic storage device in the nth stuffing frame lies between the upper and the lower threshold for the mean filling state.

3. Arrangement according to one of the claims 1 and 2, characterised thereby, that the integrator (I) determines the measure for the mean filling state of the elastic storage device (ES) at fixed support points of the frame of the second digital signal (A).

4. Arrangement according to one of the claims 1 to 3, characterised thereby, that the low-pass filter (T) is a digital filter.

5. Arrangement according to claim 4, characterised thereby, that an adder is provided in the low-pass filter (T), to which the correction value is led in order to produce the mean filling state of the elastic storage device (ES) by means of feedback.

6. Method, for mapping an information signal out of the frame of a first digital signal (D) at a first bit rate by means of pulse-stuffing technique into the frame of a second digital signal (A) at a second bit rate, with the following features:
a) the information signal (N) out of the frame of the first digital signal (D) is written into an elastic storage device (ES) and
b) the information signal (N) is read out of the elastic storage device (ES) into the frame of the second digital signal (A),
characterised thereby, that
c) a measure for the mean filling state of the elastic storage device (ES) is determined at fixed support points of the frame of the second digital signal (A), wherein the instantaneous filling states are accumulated once for each frame,
d) the measure for the mean filling state is fed to a decider (SE), which makes the stuffing decision in dependence on the measure for the mean filling state of the elastic storage device and produces a correction value which contains the stuffing information, and
e) by the correction value, the stuffing is caused in accordance with the correction value.

7. Method according to claim 6, characterised thereby, that the measure for the mean filling state of the elastic storage device by means of feedback.

8. Method according to claim 7 , characterised thereby, that the correction value corrects the filtered measure for the mean filling state of the elastic storage device by means of feedback.

9. Method according to claim 7 or claim 8, characterised thereby, that the mean filtered filling state is transmitted to a desynchroniser as additional information in the frame of the second digital signal (A).

## Revendications

1. Dispositif pour reproduire un signal utile provenant de la trame d'un premier signal numérique (D) ayant un premier débit binaire, au moyen d'une technique de justification à impulsions dans la trame d'un second signal numérique (A) ayant un second débit binaire, dispositif présentant les caractéristiques suivantes :
a) une mémoire élastique (ES) est prévue, dans laquelle est inscrit le signal utile (N) provenant de la trame du premier signal numérique (D) et d'où est extrait le signal utile (N) dans la trame du second signal numérique (A) ;
b) un détecteur de trame (RD) est prévu, qui reconnaît la trame du premier signal numérique (D) et commande l'activation pour l'écriture de la mémoire élastique (ES);
c) un générateur de trame (RG) est prévu, qui génère la trame du second signal numérique (A) et commande l'activation pour la lecture de la mémoire élastique (ES);
caractérisé en ce que :
d) un intégrateur (I) est prévu, qui forme une mesure pour le niveau de remplissage moyen de la mémoire élastique (ES)
e) un filtre passe-bas (T) est relié à l'intégrateur (I) ;
f) le filtre passe-bas (T) est relié à un circuit de décision (SE) qui prend la décision relative à la justification en fonction du signal de sortie du filtre passe-bas (T) et génère une valeur de correction contenant l'information relative à la justification
g) le circuit de décision (SE) est relié à un générateur de trame (RG) qui déclenche la justification en fonction de La valeur de correction ;
h) le circuit de décision (SE) est relié au filtre passe-bas en vue de la correction de la tension de sortie du filtre passe-bas (T) par la valeur de correction.

2. Dispositif selon la revendication 1, caractérisé en ce que le circuit de décision (SE) prend une décision relative à la justification d'après les critères suivants : une justification positive est opérée au cas où le niveau de remplissage moyen de la mémoire élastique dans la n-ième trame de justification est inférieur au seuil inférieur pour le niveau de remplissage moyen de la mémoire ; une justification négative est opérée au cas où le niveau de remplissage moyen de la mémoire élastique dans la n-ième trame de justification est supérieur au seuil supérieur pour le niveau de remplissage moyen de la mémoire. Il n'y a pas de justification au cas où le niveau de remplissage moyen de la mémoire élastique dans la n-ième trame de justification est compris entre le seuil supérieur et le seuil inférieur pour le niveau de remplissage moyen.

3. Dispositif selon les revendications 1 ou 2, caractérisé en ce que l'intégrateur (I) détermine la mesure pour le niveau de remplissage moyen de la mémoire élastique (ES) en des points d'appui fixes de la trame du second signal numérique (A).

4. Dispositif selon l'une quelconque des revendications 1 à 3, caractérisé en ce que le filtre passe-bas (T) est un filtre numérique.

5. Dispositif selon la revendication 4, caractérisé en ce qu'un additionneur est prévu dans le filtre passe-bas (T), additionneur auquel est appliquée la valeur de correction en vue de la génération, par rétro-couplage, du niveau de remplissage moyen de la mémoire élastique.

6. Procédé de reproduction d'un signal utile à partir de la trame d'un premier signal numérique (D) ayant un premier débit binaire, au moyen d'une technique de justification à impulsions dans la trame d'un second signal numérique (A) ayant un second débit binaire, procédé présentant les particularités suivantes :
a) le signal utile (N) est inscrit à partir de la trame du premier signal numérique (D) dans une mémoire élastique (ES) ;
b) le signal utile (N) est extrait de la mémoire élastique (ES) dans la trame du second signal numérique (A),
caractérisé en ce que :
c) une mesure pour le niveau de remplissage moyen de la mémoire élastique (ES) est déterminée en des points d'appui fixes de la trame du second signal numérique (A);
les niveaux de remplissage instantanés étant accumulés une fois dans chaque trame,
d) la mesure pour le niveau de remplissage moyen est envoyée à un circuit de décision (SE) qui prend la décision relative à la justification en fonction de la mesure du niveau de remplissage moyen de la mémoire élastique et génère une valeur de correction contenant l'information relative à la justification ;
e) la valeur de correction est utilisée pour déclencher la justification en fonction de cette valeur de correction.

7. Procédé selon la revendication 6, caractérisé en ce que la mesure pour le niveau de remplissage moyen de la mémoire élastique est filtrée.

8. Procédé selon la revendication 7, caractérisé en ce que la valeur de correction corrige la mesure filtrée pour le niveau de remplissage moyen de la mémoire élastique par rétro-couplage.

9. Procédé selon la revendication 7 ou 8, caractérisé en ce que le niveau de remplissage filtré moyen est transmis en tant qu'information supplémentaire dans la trame du second signal numérique (A) à un désynchroniseur.
